# EUROPÄISCHE PATENTSCHRIFT

(11) **EP 1 518 059 B1**
(45) Veröffentlichungstag und Bekanntmachung des Hinweises auf die Patenterteilung: **05.07.2006**
(21) Anmeldenummer: 03735683.9
(22) Anmeldetag: 26.06.2003
(51) Int. Cl.: F16D 23/04

(54) **SYNCHRONISERTE GETRIEBESCHALTUNG MIT HYDRAULISCHER BETÄTIGUNG**
SYNCHRONISED GEARCHANGE WITH HYDRAULIC ACTUATION
SYSTEME DE CHANGEMENT DE VITESSES SYNCHRONISE A ACTIONNEMENT HYDRAULIQUE

(30) Priorität: 02.07.2002 DE 10229515
(43) Veröffentlichungstag der Anmeldung: 30.03.2005
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2003/006734
(87) Internationale Veröffentlichungsnummer: WO 2004/005737

(56) Entgegenhaltungen:
- DE-A- 4 325 964
- GB-A- 879 436
- GB-A- 1 212 658
- US-B1- 6 250 446

## Beschreibung

Die vorliegende Erfindung betrifft eine Getriebeschaltung für Losräder gemäß dem Oberbegriff des Patentanspruches 1. Eine solche Getrießeschaltung ist aus DE-A1-43 25 964 bekannt.

Aus dem Stand der Technik sind Getriebeschaltungen für Losräder bekannt. Bei den bekannten Schaltungen sind zur Synchronisierung von Losrädern üblicherweise Synchronisiereinrichtungen vorgesehen, welche die Schiebemuffen mechanisch betätigen, um das gewünschte Losrad mit einer Welle zu synchronisieren.

Aus der Druckschrift DE 43 24 814 A1 ist eine Getriebeschaltung mit einer Sperrsynchronisierung bekannt, bei welcher ein mit einer Getriebewelle verbundener Synchronkörper und wenigstens ein mit unterschiedlicher Drehzahl rotierendes Zahnrad mit Hilfe einer durch eine Schältkraft axial verschiebbaren, ringförmigen Schiebemuffe bei Gleichlauf formschlüssig zusammenkuppelbar ist. Zwischen der Schiebemuffe und jedem Zahnrad ist ein Synchronring vorgesehen, wobei Teile des Synchronringes mit Teilen der Zahnräder eine kraftschlüssige Kupplung bilden. Wenn keine Synchronisierung vorliegt, wird durch Blockierungsflächen einer Sperrverzahnung die axiale Bewegung der Schiebemuffe gesperrt. Bei einer derartigen Getriebeschaltung wird die Synchronisierung über die Schiebemuffe ebenfalls mechanisch geschaltet.

Die Druckschrift DE 37 11 490 C2 offenbart eine Gangschalteinrichtung. Bei dieser Gangschalteinrichtung wird die Schiebemuffe von einer in der Getriebewelle angeordneten druckmittelbetriebenen Stelleinrichtung betätigt, welche aus einer hydraulisch beaufschlagbaren Stellkolbenanordnung besteht. Dabei wird ein die Schiebemuffe mit der Stellkolbenanordnung verbindender Verbindungsbolzen vorgesehen, der ein in der Getriebewelle quer angeordnetes Durchgangsloch mit axialem Spiel durchsetzt. Die bekannte Gangschalteinrichtung erfordert in nachteiliger Weise einen sehr komplexen Aufbau, da die Betätigungseinrichtung bzw. Stellkolbenanordnung in der Getriebewelle untergebracht ist. Dies beeinflusst die Fertigungskosten der bekannten Gangschalteinrichtung in negativer Weise.

Der vorliegenden Erfindung liegt die Aufgabe zugrunde, eine Getriebeschaltung der vorgenannten Gattung vorzuschlagen, welche eine möglichst einfach aufgebaute Synchronisiereinrichtung aufweist und zudem möglichst einfach ansteuerbar ist.

Diese Aufgabe wird gemäß der Erfindung durch die Merkmale des Patentanspruches 1 gelöst. Weitere Varianten und Vorteile gehen aus den Unteransprüchen hervor.

Demnach wird eine erfindungsgemäße Getriebeschaltung vorgeschlagen, bei der der als Schiebemuffe vorgesehene Kolben hydraulisch betätigt wird, wobei eine selbstsperrende Synchronisiereinrichtung vorgesehen ist. Der Kolben ist mittels hydraulischer Betätigung axial auf einer Welle verschiebbar angeordnet und mit dieser drehfest verbunden. Des weiteren ist der Kolben am Umfang der Welle vorgesehen, sodass auf diese Weise eine sehr einfach aufgebaute Synchronisiereinrichtung mit axialen Reibflächen am Losrad realisiert wird. In vorteilhafter Weise ist für die Betätigung nur ein bestimmtes hydraulisches Druckniveau erforderlich. Dieses Druckniveau kann also mit einfachen Schaltventilen angesteuert werden.

Im Rahmen einer vorteilhaften Weiterbildung kann vorgesehen sein, dass die Synchronisiereinrichtung zumindest einen mit einem ausgewählten Losrad in Eingriff bringbaren Kolben aufweist. Der Kolben wird deshalb mittels hydraulischer Betätigung axial auf der Welle verschoben. Zur Rückstellung des Kolbens in eine Leerlaufstellung der Synchronisiereinrichtung kann zumindest ein geeignetes Rückstellfederelement oder dergleichen vorgesehen sein.

Vorzugsweise kann der Kolben als im Querschnitt stufenförmiger Ringflansch ausgebildet sein, wobei dieser in einem Kolbenträger aufgenommen ist, welcher mit der Welle fest verbunden ist. Zwischen dem Kolben und dem Kolbenträger ist ein Kolbenraum zur hydraulischen Betätigung vorgesehen, welcher bevorzugt mit Drucköl gespeist wird. Der als Ringflansch ausgebildete Kolben kann an seiner äußeren Stufe eine erste Innenverzahnung als Kupplungsverzahnung zum Losrad und zum Verbinden mit der Welle eine zweite Innenverzahnung an der inneren Stufe aufweisen.

Gemäß einer Weiterbildung der vorliegenden Erfindung kann das Losrad, welches drehbar auf der Welle gelagert ist, eine Laufverzahnung aufweisen, welche mit weiteren drehmomentübertragenden Elementen formschlüssig verbunden ist. Ferner kann eine Kupplungsverzahnung zum formschlüssigen Verbinden mit dem Kolben an dem Losrad im durchgeschalteten Zustand vorgesehen sein.

Bevorzugt kann das Losrad auf einem Profilelement oder dergleichen der Welle gelagert sein. Es ist auch denkbar, dass zur Lagerung des Losrades ein Wälz- oder Gleitlager verwendet wird.

Der Kolbenträger kann alternativ auch einteilig mit der Welle ausgebildet sein. Zur Abdichtung des Kolbenraumes kann zumindest ein Dichtelement vorgesehen sein, welches bevorzugt in einer entsprechenden Ausnehmung an dem Kolbenträger vorgesehen ist. Es ist auch möglich, dass ein oder mehrere Dichtelemente, wie z. B. Dichtringe oder dergleichen, an dem Kolben vorgesehen sind.

Eine Weiterbildung der vorliegenden Erfindung kann vorsehen, dass z. B. in axialer Richtung zwischen dem Kolben und dem Losrad eine erste Reiblamelle mit einer Innenverzahnung und einer Außenverzahnung angeordnet ist. Vorzugsweise ist die Außenverzahnung zumindest an dem dem Kolben zugewandten Ende angeschrägt, sodass die erste Reiblamelle während einer Synchronisierphase als Sperrelement fungiert und eine selbstsperrende Synchronisiereinrichtung realisiert. Ferner kann eine zweite Reiblamelle an der dem Kolben abgewandten Seite des Losrades vorgesehen sein. Besonders vorteilhaft ist es, wenn die erste Reiblamelle und die zweite Reiblamelle identisch ausgeführt sind, da somit der Fertigungsaufwand verringert wird.

Alternativ kann bei der erfindungsgemäßen Getriebeschaltung eine dritte Reiblamelle, welche eine Außenlamelle bildet, und eine vierte Reiblamelle, welche eine Innenlamelle bildet vorgesehen sein, wobei die Innenlamelle zwischen der Außenlamelle und der zweiten Reiblamelle angeordnet sein kann.

Die Erfindung wird im folgenden anhand der beigefügten Figuren näher erläutert.

Es zeigen:
- Fig. 1: eine geschnittene Teilansicht einer erfindungsgemäßen Getriebeschaltung mit Synchronisierung im Leerlauf;
- Fig. 2: eine schematische Ansicht der Stellung der verschiedenen Zahnräder zueinander gemäß Fig. 1;
- Fig. 3: eine geschnittene Teilansicht der erfindungsgemäßen Getriebeschaltung mit Synchronisierung in Sperr- bzw. Synchronisierstellung;
- Fig. 4: eine schematische Ansicht der Stellung der verschiedenen Zahnräder zueinander gemäß Fig. 2;
- Fig. 5: eine geschnittene Teilansicht der erfindungsgemäßen Getriebeschaltung mit Synchronisierung in geschaltetem Zustand;
- Fig. 6: eine schematische Ansicht der Stellung der verschiedenen Zahnräder zueinander gemäß Fig. 5;
- Fig. 7: eine geschnittene Teilansicht einer weiteren Ausgestaltung der erfindungsgemäßen Getriebeschaltung mit Synchronisierung und
- Fig. 8: eine schematische Ansicht der Stellung der verschiedenen Zahnräder zueinander gemäß Fig. 7.

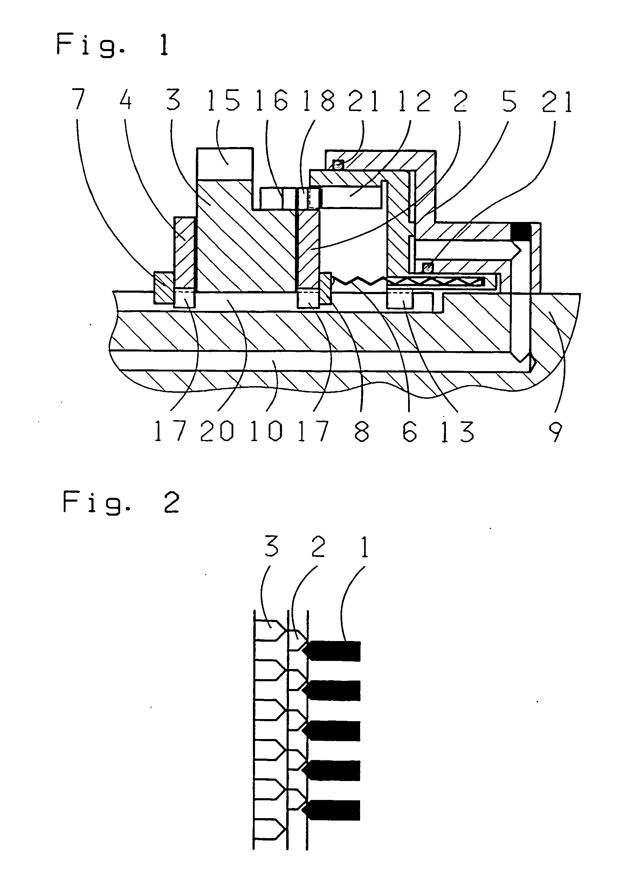

In den Fig. 1 bis 6 ist eine mögliche Ausgestaltung der erfindungsgemäßen Getriebeschaltung mit einer Synchronisiereinrichtung dargestellt.

Die Synchronisiereinrichtung umfasst einen als stufenförmigen Ringflansch ausgebildeten Kolben 1, welcher an seiner äußeren Stufe eine erste Innenverzahnung 12 als Kupplungsverzahnung mit einem Losrad 3 und an seiner inneren Stufe zum Verbinden mit einer Welle 9 eine zweite Innenverzahnung 13 aufweist. Der Kolben 1 ist axial auf der Welle verschiebbar und mit dieser drehfest verbunden, wobei der als Ringflansch ausgebildete Kolben am Umfang der Welle vorgesehen ist. Das dem Losrad 3 zugewandte Ende der ersten Innenverzahnung des Kolbens bzw. der Schiebemuffe ist zumindest teilweise angeschrägt.

In axialer Richtung ist zwischen dem Kolben 1 und dem Losrad 3 eine erste Reiblamelle 2 mit einer Innenverzahnung 17 und einer Außenverzahnung 18 vorgesehen, wobei die dem Losrad 3 zugewandte Seite als Reibfläche dient. Während einer Synchronisierungsphase wird die erste Reiblamelle 2 auch als Sperrelement verwendet, sodass eine selbstsperrende Synchronisiereinrichtung realisiert wird. Die Außenverzahnung 18 der Reiblamelle 2 ist an dem dem Kolben 1 zugewandten Ende angeschrägt. In radialer Richtung kann sich die Reiblamelle 2 in ihrer Innenverzahnung zur Welle 9 um den Zwischenraum zwischen zwei benachbarten Zähne der ersten Innenverzahnung 12 des Kolbens 1 verdrehen. Hierzu weist die Innenverzahnung der Reiblamelle 2 zur Welle 9 ein Spiel auf, welches so groß ausgeführt ist wie der Zwischenraum zwischen zwei benachbarten Zähnen der ersten Innenverzahnung 12 des Kolbens 1.

Das Losrad 3 weist eine Laufverzahnung 15 und eine Kupplungsverzahnung 16 mit angeschrägten Zähnen an der der Reiblamelle 2 zugewandten Seite auf. In einem nicht geschalteten Zustand, also im Leerlauf, ist dieses Losrad 3 frei auf der Welle 9 drehbar. Das Losrad 3 ist auf einem Profil 20 der Welle 9 drehbar gelagert.

In axialer Richtung ist hinter dem Losrad 3 eine zweite Reiblamelle 4 vorgesehen, welche nur eine Innenverzahnung 17' zur Welle 9 hin aufweist. An den jeweils dem Losrad 3 abgewandten Seiten der Reiblamellen 2, 4 sind Sicherungsringe 7, 8 vorgesehen, an denen sich die Reiblamellen 2, 4 in axialer Richtung abstützen. Die Reiblamellen 2, 4 weisen auf den Reibflächen einen geeigneten Reibbelag auf.

Der Kolben 1 ist in einem Kolbenträger 5 aufgenommen, welcher mit der Welle 9 fest verbunden ist. Der Kobenträger 5 weist eine Druckölzuführung 10 für die hydraulische Betätigung der Synchronisiereinrichtung und geeignete Dichtelemente 21, 21' zum Abdichten des Kolbenraumes 1 auf. Ferner sind gleichmäßig am Umfang des Kolbens 1 verteilt Rückstellfedern 6 vorgesehen. Die Rückstellfedern 6 ermöglichen eine Rückstellung des Kolbens 1 in einem nicht geschalteten Zustand.

In Fig. 1 ist die erfindungsgemäße Getriebeschaltung im Leerlauf gezeigt. Im Leerlauf wird der Kolben 1 durch die Rückstellfedern 6 an einem Anschlag an dem Kolbenträger 5 gehalten. Der Kolbenraum zwischen dem Kolben 1 und dem Kolbenträger 5 ist in diesem Zustand drucklos. Das Losrad 3 ist frei auf der Welle 9 drehbar, wobei zwischen dem Losrad 3 und den jeweiligen Reiblamellen 2, 4 ein axiales Spiel vorhanden ist. Die erste Reiblamelle 2 hat in Umfangsrichtung eine beliebige Stellung in ihrem Verdrehspiel zur Welle 9.

Aus Fig. 2 ist ersichtlich, dass im Leerlauf die angeschrägten Zähne der ersten Innenverzahnung 12 des Kolbens 1 nicht mit den angeschrägten Zähnen der Außenverzahnung 18 der Reiblamelle 2 in Berührung stehen.

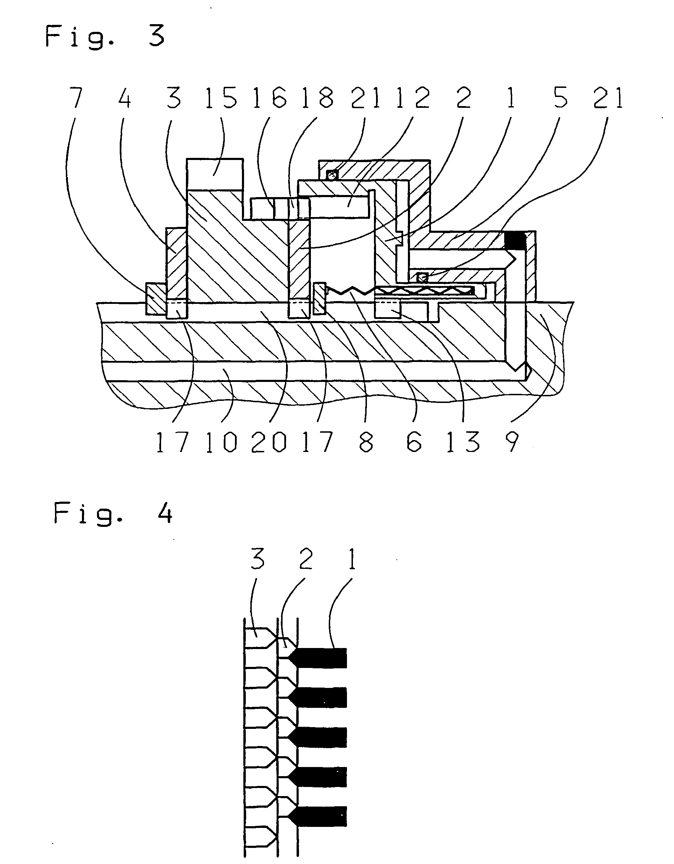

In Fig. 3 ist eine Sperr- und Synchronisierstellung der Getriebeschaltung dargestellt. Der Kolbenraum zwischen dem Kolben 1 und dem Kolbenträger 5 ist in dieser Stellung mit Drucköl beaufschlagt. Durch die Bewegung des Kolbens 1 ist das Axialspiel zwischen dem Losrad 3 und den jeweiligen Reiblamellen 2, 4 aufgehoben und die Reiblamellen 2, 4 werden jeweils gegen die Sicherungsringe 6, 7 geschoben. Wegen dem in Umfangsrichtung wirkenden Reibmoment zwischen dem Losrad 3 und der Reiblamelle 2 ist diese bis zu ihrem maximalen Verdrehspiel gegen den Kolben 1 verdreht. Die angeschrägten Zähne des Kolbens 1 liegen an den angeschrägten Zähnen der ersten Reiblamelle 2 an, wie dies in Fig. 4 gezeigt ist. In dieser Sperr- und Synchronisierstellung der Getriebeschaltung wird das Durchschalten des Kolbens 1 verhindert.

Die aus dem Reibmoment wirkende Umfangskraft an der Reiblamelle 2 ist dabei größer als die von den schrägen Zahnflächen des Kolbens 1 wirkende Umfangskraft auf die Reiblamelle 2. Dies bedeutet, dass der Kolben 1 gesperrt bleibt, solange zwischen der Welle 9 und dem Losrad 3 eine Differenzdrehzahl und damit ein entsprechendes Reibmoment vorhanden ist.

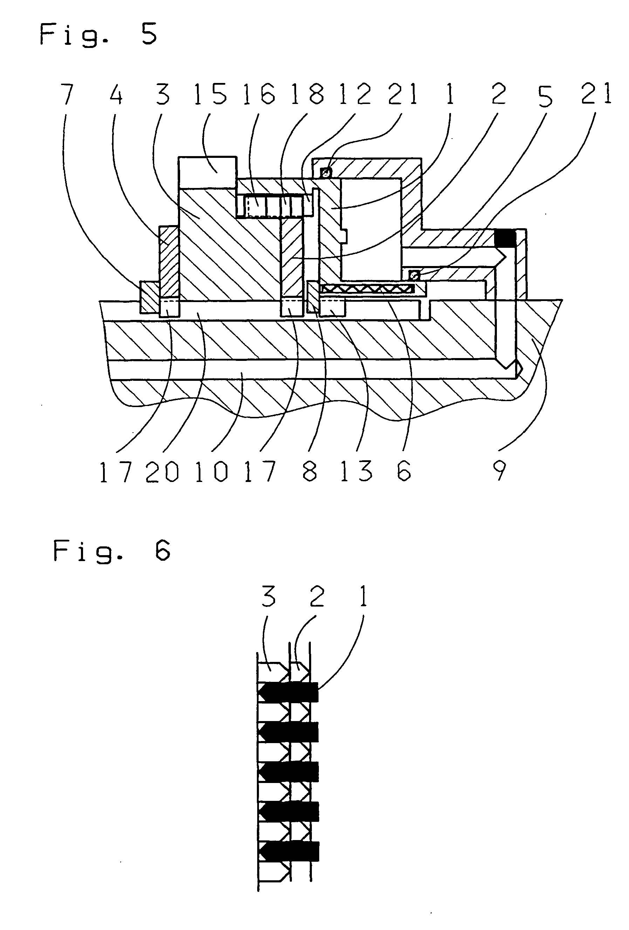

In Fig. 5 ist der durchgeschaltete Zustand gezeigt, bei dem das Losrad 3 über den Kolben 1 mit der Welle 9 formschlüssig verbunden ist. Sobald die Differenzdrehzahl zwischen dem Losrad 3 und der Reiblamelle 2 gegen null strebt, verschwindet die Umfangskraft aus diesem Reibmoment an der ersten Reiblamelle 2. Dann ist der Kolben 1 in der Lage, die Reiblamelle 2 zurückzudrehen, so dass die Zähne der ersten Innenverzahnung 12 des Kolbens 1 durch die Zwischenräume zwischen den Zähnen der Außenverzahnung 18 der ersten Reiblamelle 2 geführt werden können, welches in Fig. 6 angedeutet ist. Der Kolben 1 kann somit durchgeschaltet werden, sodass der Kolben 1 mit dem Losrad 3 formschlüssig mit der Welle 9 verbunden wird.

Um die Verbindung zu lösen, kann lediglich die Druckbeaufschlagung des Kolbenraums zwischen dem Kolben 1 und dem Kolbenträger 5 beendet werden. Die Rückstellfedern 6 schieben dann den Kolben 1 in seine Ausgangsstellung zurück.

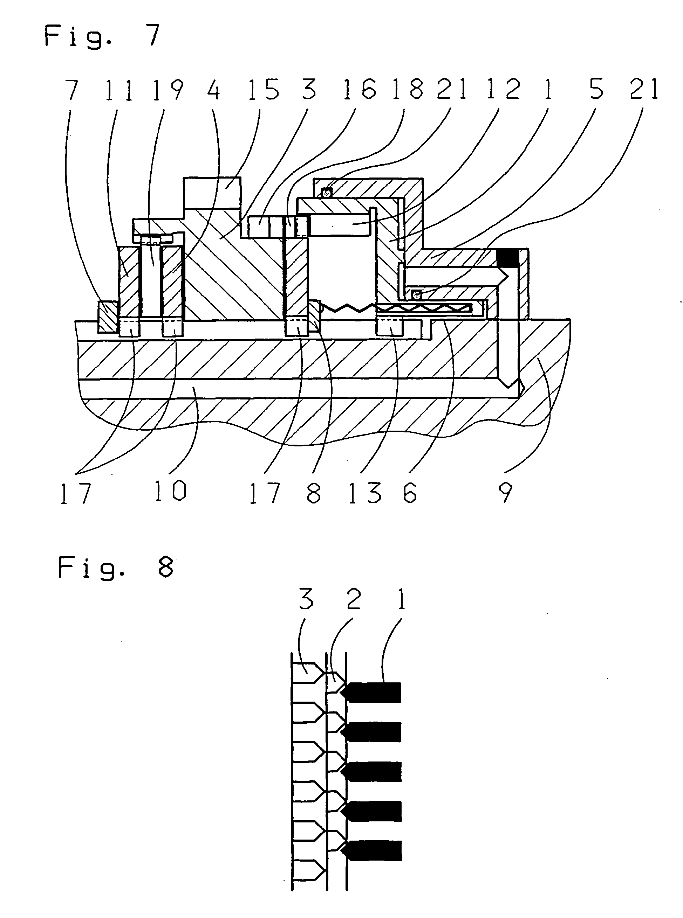

Sollten größere Reibmomente bei der Synchronisiereinrichtung erforderlich sein, kann eine weitere in Fig. 7 und 8 dargestellte Ausgestaltung der erfindungsgemäßen Getriebeschaltung verwendet werden.

Die dort gezeigte Ausgestaltung stellt eine mögliche Erweiterung der zuvor gezeigten Ausgestaltung dar. Bei dieser Synchronisiereinrichtung ist an der dem Kolben 1 abgewandten Seite des Losrades 3 eine dritte Reiblamelle 11 als Außenlamelle und eine vierte Reiblamelle 19 als Innenlamelle vorgesehen. Auch die dritte Reiblamelle 11 weist eine Innenverzahnung 17" zum Verbinden mit der Welle 9 auf.

Auf diese Weise kann somit bei der hier dargestellten Ausgestaltung die Reibflächenanzahl auf 4 erhöht werden. Die Anzahl der Reibflächen lässt sich über das hier gezeigte Maß weiter erhöhen.

### Bezugszeichen

- 1: Kolben
- 2: Reiblamelle mit Innen- und Außenverzahnung
- 3: Losrad
- 4: Reiblamelle mit Innenverzahnung
- 5: Kolbenträger
- 6: Rückstellfedern
- 7: Sicherungsring
- 8: Sicherungsring
- 9: Welle
- 10: Druckölzuführung
- 11: dritte Reiblamelle
- 12: erste Innenverzahnung des Kolbens
- 13: zweite Innenverzahnung des Kolbens
- 15: Laufverzahnung
- 16: Kupplungsverzahnung des Losrades
- 17,17',17'': Innenverzahnung an Reiblamellen
- 18: Außenverzahnung der ersten Reiblamelle
- 19: vierte Reiblamelle
- 20: Profil
- 21, 21': Dichtringe/-elemente

## Patentansprüche

1. Getriebeschaltung mit einer Synchronisiereinrichtung für Losräder, welche hydraulisch betätigbar ist und zumindest einen mit einem ausgewählten Losrad (3) in Eingriff bringbaren Kolben (1) als Schiebemuffe aufweist, wobei der Kolben (1) mittels hydraulischer Betätigung axial auf einer Welle (9) verschiebbar und mit dieser drehfest verbunden ist, wobei eine selbstsperrende Synchronisierung vorgesehen ist, **dadurch gekennzeichnet , dass** bei der selbstsperrenden Synchronisierung zumindest eine Reiblamelle (2, 4) mit einer dem Losrad (3) zugewandten Reibfläche vorgesehen ist, wobei die zumindest eine Reiblamelle (2, 4) zumindest eine Innenverzahnung (17, 17') aufweist, welche zum Verbinden mit der Welle (9) vorgesehen ist.

2. Getriebeschaltung nach Anspruch 1, **dadurch gekennzeichnet, dass** die Synchronisiereinrichtung einen den Kolben (1) aufnehmenden Kolbenträger (5) aufweist, welcher mit der Welle (9) drehfest verbunden ist und eine Druckölzuführung (10) aufweist, sodass ein Kolbenraum zwischen dem Kolben (1) und dem Kolbenträger (5) vorgesehen ist, welcher zur hydraulischen Betätigung des Kolbens (1) mit Druck beaufschlagbar ist.

3. Getriebeschaltung nach Anspruch 1 oder 2, **dadurch gekennzeichnet, dass** der Kolben (1) als stufenförmiger Ringflansch ausgebildet ist, welcher an seiner äußeren Stufe eine erste Innenverzahnung (12) zum Verbinden mit dem Losrad (3) und an seiner inneren Stufe zum Verbinden mit der Welle (9) eine zweite Innenverzahnung (13) aufweist.

4. Getriebeschaltung nach Anspruch 3 , **dadurch gekennzeichnet , dass** zumindest das dem Losrad (3) zugewandte Ende der ersten Innenverzahnung (12) des Kolbens (1) angeschrägt ist.

5. Getriebeschaltung nach einem der vorangehenden Ansprüche, **dadurch gekennzeichnet , dass** das Losrad (3) eine Laufverzahnung (15) zum formschlüssigen Verbinden mit weiteren drehmomentübertragenden Elementen und eine Kupplungsverzahnung (16) zum formschlüssigen Verbinden mit dem Kolben (1) aufweist, und dass das Losrad (3) drehbar auf der Welle (9) gelagert ist.

6. Getriebeschaltung nach einem der vorangehenden Ansprüche, **dadurch gekennzeichnet , dass** in axialer Richtung zwischen dem Kolben (1) und dem Losrad (3) eine erste Reiblamelle (2) mit einer Innenverzahnung (17) und einer Außenverzahnung (18) vorgesehen ist, welche zumindest an dem dem Kolben (1) zugewandten Ende angeschrägt ist.

7. Getriebeschaltung nach Anspruch 6 , **dadurch gekennzeichnet , dass** die erste Reiblamelle (2) während einer Synchronisierphase als Sperrelement vorgesehen ist, sodass eine selbstsperrende Synchronisiereinrichtung realisierbar ist.

8. Getriebeschaltung nach Anspruch 3 , **dadurch gekennzeichnet , dass** die Zähne der ersten Innenverzahnung (12) des Kolbens (1) zum Durchschalten in axialer Richtung durch die jeweiligen Zwischenräume zwischen den Zähnen der Außenverzahnung (18) der ersten Reiblamelle (2) führbar sind, sodass der mit der Welle (9) verbundene Kolben (1) mit dem Losrad (3) formschlüssig verbindbar ist.

9. Getriebeschaltung nach einem der vorangehenden Ansprüche, **dadurch gekennzeichnet , dass** eine zweite Reiblamelle (4) an dem Kolben (1) abgewandten Seite des Losrades (3) vorgesehen ist.

10. Getriebeschaltung nach einem der vorangehenden Ansprüche, **dadurch gekennzeichnet , dass** eine dritte Reiblamelle (11) vorgesehen ist, welche eine Außenlamelle bildet, wobei zwischen der Außenlamelle und der zweiten Reiblamelle (4) eine vierte Reiblamelle (19) vorgesehen ist, welche eine Innenlamelle bildet.

11. Getriebeschaltung nach einem der vorangehenden Ansprüche, **dadurch gekennzeichnet , dass** zur Rückstellung des Kolbens (1) zumindest eine Rückstellfeder (6) vorgesehen ist.

12. Getriebeschaltung nach Anspruch 11, **dadurch gekennzeichnet , dass** mehrere Rückstellfeder (6) vorgesehen sind, welche über den Umfang des Kolbens (1) gleichmäßig verteilt sind.

13. Getriebeschaltung nach Anspruch 2 , **dadurch gekennzeichnet , dass** zur Abdichtung des Kolbenraumes zumindest ein Dichtelement (21, 21') zwischen dem Kolbenträger (5) und dem Kolben (1) vorgesehen ist.

14. Getriebeschaltung nach Anspruch 7, **dadurch gekennzeichnet , dass** die Innenverzahnung der Reiblamelle (2) ein so großes Spiel zur Welle (9) aufweist, wie der Zwischenraum zwischen zwei benachbarten Zähnen der ersten Innenverzahnung (12) ist.

## Claims

1. Gear shift system with a synchroniser mechanism for loose gears which can be hydraulically operated and has at least one piston (1) as a sliding sleeve which can be moved into engagement with a selected loose gear (3), and the piston (1) can be hydraulically operated so as to be axially displaced on a shaft (9) and is connected to the latter so as to rotate with it, thereby resulting in a self-locking synchronisation, **characterised in that**, to provide self-locking synchronisation, at least one friction disc (2, 4) is provided with a friction surface facing the loose gear (3) and the at least one friction disc (2, 4) has at least an inner toothing (17, 17') which is provided as a means of connecting to the shaft (9).

2. Gear shift system as claimed in claim 1, **characterised in that** the synchroniser system has a piston carrier (5) accommodating the piston (1) which is connected to the shaft (9) so as to rotate with it and has a pressurised oil inlet (10) so that a piston chamber formed between the piston (1) and the piston carrier (5) can be pressurised to enable hydraulic operation of the piston (1).

3. Gear shift system as claimed in claim 1 or 2, **characterised in that** the piston (1) is provided in the form of a stepped annular flange with a first inner toothing (12) on its outer step which connects with the loose gear (3) and a second inner toothing (13) on its inner step to connect with the shaft (9).

4. Gear shift system as claimed in claim 3, **characterised in that** at least the end of the first inner toothing (12) of the piston (1) facing the loose gear (3) is chamfered.

5. Gear shift system as claimed in one of the preceding claims, **characterised in that** the loose gear (3) has runner teeth (15) for providing a positive connection to other torque-transmitting elements and coupling teeth (16) for providing a positive connection to the piston (1), and the loose gear (3) is mounted so as to be rotatable on the shaft (9).

6. Gear shift system as claimed in one of the preceding claims, **characterised in that** a first friction disc (2) with inner toothing (17) and outer toothing (18) is provided between the piston (1) and the loose gear (3) in the axial direction which are chamfered at least at the end facing the piston (1).

7. Gear shift system as claimed in claim 6, **characterised in that** the first friction disc (2) is provided as a locking element during a synchronising phase, thereby providing a self-locking synchroniser mechanism.

8. Gear shift system as claimed in claim 3, **characterised in that** the teeth of the first inner toothing (12) of the piston (1) can be guided through the respective gaps between the teeth of the outer toothing (18) of the first friction disc (2) to provide a shift in the axial direction so that the piston (1) connected to the shaft (9) can be positively connected to the loose gear (3).

9. Gear shift system as claimed in one of the preceding claims, **characterised in that** a second friction disc (4) is provided on the side of the loose gear (3) remote from the piston (1).

10. Gear shift system as claimed in one of the preceding claims, **characterised in that** a third friction disc (11) is provided which forms an outer disc, and a fourth friction disc (19) is disposed between the outer disc and the second friction disc (4) which forms an inner disc.

11. Gear shift system as claimed in one of the preceding claims, **characterised in that** at least one return spring (6) is provided as a means of re-setting the piston (1).

12. Gear shift system as claimed in claim 11, **characterised in that** several return springs (6) are provided, which are uniformly distributed across the periphery of the piston (1).

13. Gear shift system as claimed in claim 2, **characterised in that** at least one seal element (21, 21') is provided between the piston carrier (5) and the piston (1) in order to seal the piston chamber.

14. Gear shift system as claimed in claim 7, **characterised in that** the inner toothing of the friction disc (2) has a clearance with respect to the shaft (9) which is as big as the gap between two adjacent teeth of the first inner toothing (12).

## Revendications

1. Commande de boîte de vitesses pourvue d'un dispositif de synchronisation pour pignons fous qui peut être actionné hydrauliquement et qui comprend comme baladeur au moins un piston (1) qui peut être mis en prise avec un pignon fou (3) sélectionné, le piston (1) pouvant être déplacé en translation axiale sur un arbre (9) par un actionnement hydraulique et étant relié solidairement en rotation à cet arbre, dans lequel il est prévu une synchronisation à autoverrouillage, **caractérisée en ce que**, dans la synchronisation à autoverrouillage, il est prévu au moins un disque de friction (2, 4) comportant une surface de friction dirigée vers le pignon fou (3), le au moins un disque de friction (2, 4) comportant au moins une denture intérieure (17, 17') qui est prévue pour la liaison avec l'arbre (9).

2. Commande de boîte de vitesses selon la revendication 1, **caractérisée en ce que** le dispositif de synchronisation comporte un porte-piston (5) qui reçoit le piston (1), est relié solidairement en rotation à l'arbre (9) et comporte une arrivée d'huile sous pression (10), de sorte qu'il est prévu entre le piston (1) et le porte-piston (5) une chambre de piston qui peut être sollicitée par une pression pour l'actionnement hydraulique du piston (1).

3. Commande de boîte de vitesses selon la revendication 1 ou 2, **caractérisée en ce que** le piston (1) est constitué par un flasque annulaire de forme étagée qui comporte, sur son gradin extérieur, une première denture intérieure (12) destinée à la liaison avec le pignon fou (3) et, sur son gradin intérieur, pour la liaison avec l'arbre (9), une deuxième denture intérieure (13).

4. Commande de boîte de vitesses selon la revendication 3, **caractérisée en ce que** au moins l'extrémité de la première denture intérieure (12) du piston (1) qui est dirigée vers le pignon fou (3) est chanfreinée.

5. Commande de boîte de vitesses selon l'une des revendications précédentes, **caractérisée en ce que** le pignon fou (3) comporte une denture d'entraînement (15) pour la liaison par complémentarité de forme avec d'autres éléments qui transmettent le couple, et une denture d'embrayage (16) pour la liaison par complémentarité de forme avec le piston (1), et **en ce que** le pignon fou (3) est monté mobile en rotation sur l'arbre (9).

6. Commande de boîte de vitesses selon l'une des revendications précédentes, **caractérisée en ce qu'**il est prévu entre le piston (1) et le pignon fou (3), vu dans la direction axiale, un premier disque de friction (2) comportant une denture intérieure (17) et une denture extérieure (18), laquelle est chanfreinée au moins à l'extrémité dirigée vers le piston (1).

7. Commande de boîte de vitesses selon la revendication 6, **caractérisée en ce que** le premier disque de friction (2) est prévu comme élément de verrouillage pendant une phase de synchronisation, de sorte qu'il est possible de réaliser un dispositif de synchronisation à autoverrouillage.

8. Commande de boîte de vitesses selon la revendication 3, **caractérisée en ce que** les dents de la première denture intérieure (12) du piston (1) pour le passage de rapport, peuvent être guidées dans la direction axiale par les espaces intermédiaires correspondants formés entre les dents de la denture extérieure (18) du premier disque de friction (2), de sorte que le piston (1) relié à l'arbre (9) peut être relié au pignon fou (3) par une liaison par complémentarité de forme.

9. Commande de boîte de vitesses selon l'une des revendications précédentes, **caractérisée en ce qu'**un deuxième disque de friction (4) est prévu sur le côté du pignon fou (3) qui est éloigné du piston (1).

10. Commande de boîte de vitesses selon une des revendications précédentes, **caractérisée en ce qu'**il est prévu un troisième disque de friction (11) qui forme un disque extérieur, un quatrième disque de friction (19), qui forme un disque intérieur, étant prévu entre le disque extérieur et le deuxième disque de friction (4).

11. Commande de boîte de vitesses selon l'une des revendications précédentes, **caractérisée en ce qu'**il est prévu au moins un ressort de rappel (6) pour le rappel du piston (1).

12. Commande de boîte de vitesses selon la revendication 11, **caractérisée en ce qu'**il est prévu plusieurs ressorts de rappel (6) qui sont uniformément répartis sur la périphérie du piston (1).

13. Commande de boîte de vitesses selon la revendication 2, **caractérisée en ce qu'**il est prévu au moins un élément d'étanchéité (21, 21') entre le porte-piston (5) et le piston (1) pour réaliser l'étanchéité de la chambre de piston.

14. Commande de boîte de vitesses selon la revendication 7, carac- térisée en ce que la denture intérieure du disque de friction (2) présente par rapport à l'arbre (9) un jeu qui est aussi grand que l'espace intermédiaire entre deux dents adjacentes de la première denture intérieure (12).
